# EUROPEAN PATENT APPLICATION

(11) **EP 4 571 589 A2**
(43) Date of publication of application: **18.06.2025**
(21) Application number: 25174048.6
(22) Date of filing: 26.12.2022
(51) Int. Cl.: G06N 3/084

(54) **SPARSITY MASKING METHODS FOR NEURAL NETWORK TRAINING**

(30) Priority: 29.03.2022 US 202217657112
(62) Divisional of application: 22854601.6
(71) Applicant: Microsoft Technology Licensing, LLC, Redmond, WA 98052 (US)
(72) Inventor: GOLUB, Maximilian Taylor, Redmond, 98052 (US); DARVISH ROUHANI, Bita, Redmond, 98052 (US); CHUNG, Eric S, Redmond, 98052 (US); BURGER, Douglas Christopher, Redmond, 98052 (US)
(74) Representative: CMS Cameron McKenna Nabarro Olswang LLP

(57) **Abstract**

A method is presented for training a neural network. For a weight matrix having integer dimensions M₁ in a first dimension and an integer dimension M₂ in a second dimension, a first balanced sparsity mask is generated that is an N ₁ of M₁ mask in the first dimension. The first balanced sparsity mask is applied to the weight matrix during inference. A second balanced sparsity mask is generated for a transpose of the weight matrix. The second balanced sparsity mask is an N₂ of M₂ mask in the second dimension. The second balanced sparsity mask is applied to the transpose of the weight matrix during backpropagation.

## Description

### BACKGROUND

Deep neural networks (DNNs) may be used in machine learning to build artificial intelligence models. Deep learning workloads comprise input data, weight matrices that are learned during supervised training, and activation matrices that are computed from the input data and weight matrices. As computing resources expand, larger data sets can be processed, requiring the DNNs to be scaled up accordingly. Sparsity may be used as a tool to reduce the amount of compute and/or memory consumed for the operations required during training of a DNN.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A method is presented for training a neural network. For a weight matrix having integer dimensions M₁ in a first dimension and an integer dimension M₂ in a second dimension, a first balanced sparsity mask is generated that is an N₁ of M₁ mask in the first dimension. The first balanced sparsity mask is applied to the weight matrix during inference. A second balanced sparsity mask is generated for a transpose of the weight matrix. The second balanced sparsity mask is an N₂ of M₂ mask in the second dimension. The second balanced sparsity mask is applied to the transpose of the weight matrix during backpropagation.

### BRIEF DESCRIPTION OF THE DRAWINGS

FIG. 1 schematically shows an example system for training a neural network.
FIG. 2 schematically shows an example of dense training of a neural network.
FIG. 3 schematically shows an example of sparsified training of a neural network.
FIG. 4 schematically shows simple matrix sparsification.
FIG. 5 schematically shows unstructured and balanced sparsity masks.
FIG. 6 schematically shows sparsity masks with varying degrees of sparsity.
FIG. 7 schematically shows transposed sparsity masks.
FIG. 8 is a flow diagram for an example method for sparse training of a neural network.
FIG. 9 schematically shows a method for generating a dual N of M mask.
FIG. 10 is a flow diagram for an example method for sparse training of a neural network.
FIG. 11 schematically shows a method for applying a balanced N of M mask to a weight matrix for inference.
FIG. 12 schematically shows a method for applying a balanced N of M mask to a transposed weight matrix for backpropagation.
FIG. 13 is a flow diagram for an example method for sparse ladder training of a neural network.
FIG. 14 is a timing diagram for sparse ladder training of a neural network.
FIG. 15 schematically depicts an example computing system.

### DETAILED DESCRIPTION

As deep neural networks (DNNs) dramatically increase in number of parameters, the compute and memory requirements for training those networks also increase. The training process becomes slow and computationally expensive Sparsifying over-parameterized DNNs is a common technique to reduce the compute and memory footprint during inference time. Sparse training, however, remains challenging.

By removing 50%, 75%, 87.5% or more of each tensor in some, most, or all layers, the total amount of memory accesses and compute may be reduced accordingly. Unstructured sparsity techniques can allow for high degrees of accuracy but are challenging to accelerate with hardware and essentially limited to systems that are hard coded to operate using sparsity. Other systems would just assume dense training.

Thus, in order to effectively reduce the end-to-end cost of training, sparsity should follow a certain pattern. For example, properly deploying balanced fine-grained sparsity may provide accuracy and performance that asymptotically approaches the accuracy of unstructured sparsity. In balanced fine-grained sparsity, a single MxM block of weights or other parameters are constrained to have at most N of the M parameters in each row and/or column be non-zero. All other parameters are masked to 0. By constraining the sparsity pattern in this way, hardware can be more efficiently implemented to benefit from the computational sparsity, even for systems that do not inherently use sparsity.

One challenge is that the weight matrices have to be transposed during backpropagation. When the weight matrix is transposed, the N of M row constraint no longer holds, and the resulting sparsity pattern is irregular. Creating transposable masks that satisfy the common N of M constraint is a very computationally difficult problem. Performing these computations for each round of training may thus significantly slow performance without increasing performance of the resulting trained network.

This detailed description described systems and methods for balanced sparse training, and in particular, methods for leveraging sparsity to accelerate the training phase. During training, balanced sparsity can be applied to various parts of the network including to the weights, activations, gradients, and/or error tensors. In a first set of examples, a mask is generated that can be used during both forward and backward passes. In other words, the mask works for both the original tensor matrix and the transposed tensor matrix. In a second set of examples, the mask used for the forward pass is discarded, and a new mask dynamically generated for the backward pass. Additional adjustments to balance speed and accuracy may be achieved by selecting to only use sparse weights during the inference, or during inference and backprop, with sparse or fully dense error and activation tensors.

In each example, training can be performed entirely at one sparsity setting, or in a set of progressively decreasing sparsity stages. In some examples, the network can be trained directly for sparse inference, and/or fine-tuned at the end of sparse training as a full dense network. The training cost incurred for each approach is significantly lower than fully dense training, while the flexible constraints allow for approximation of dense training.

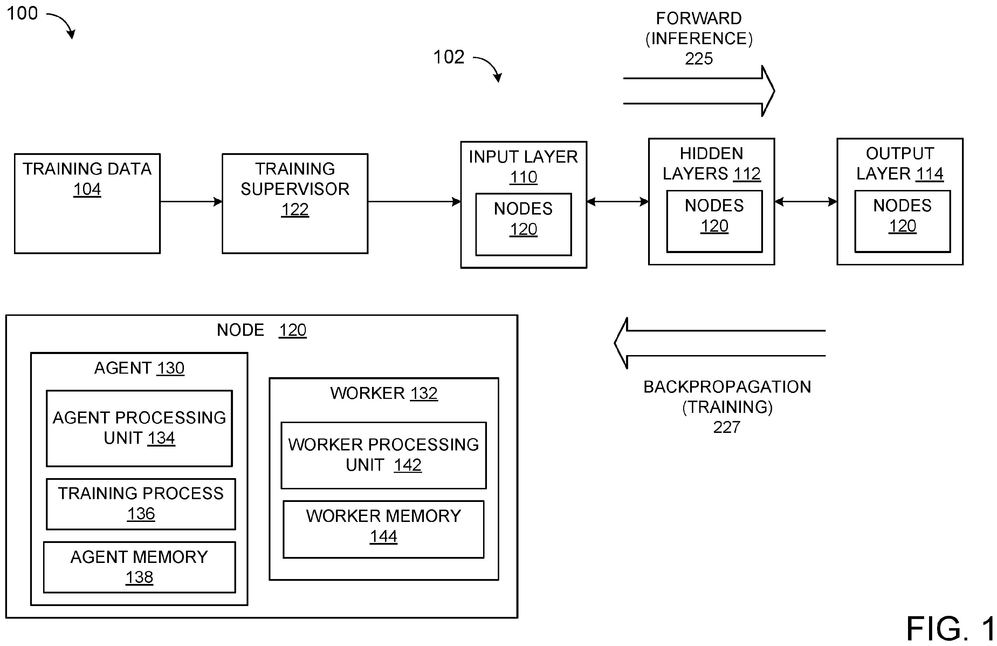

FIG. 1 shows an example system 100 for training of a neural network 102. In this example, training data 104 is used to train parameters of neural network 102, such as the weights and/or gradients of neural network 102. Training data 104 may be processed over multiple iterations to arrive at a final trained set of model parameters.

Neural network 102 includes an input layer 110, one or more hidden layers 112, and an output layer 114. Each layer includes a plurality of nodes 120. Training supervisor 122 may provide training data 104 to the input layer 110 of neural network 102. In some examples, training data 104 may be divided into minibatches and/or shards for distribution to subsets of inputs. Training supervisor 122 may include one or more network accessible computing devices programmed to provide a service that is responsible for managing resources for training jobs. Training supervisor 122 may further provide information and instructions regarding the training process to each node 120.

In this example, nodes 120 of the model receive input values on input layer 110 and produce an output result on output layer 114 during forward processing, or inference (125). During training, the data flows in the reverse direction during backpropagation (127), where an error between a network result and an expected result is determined at the output and the weights are updated layer by layer flowing from output layer 114 to input layer 110.

Each node 120 may include one or more agents 130 configured to supervise one or more workers 132. In general, each node 120 contains multiple workers 132, and an agent 130 may monitor multiple workers. Each node may further contain multiple agents 130. Nodes 120 may be implemented using a central processing unit (CPU), a GPU, a combination of CPUs and GPUs, or a combination of any CPUs, GPUs, ASICs, and/or other computer programmable hardware. Agents 130 and workers 132 within a common node 120 may share certain resources, such as one or more local networks, storage subsystems, local services, etc.

Each agent 130 may include an agent processing unit 134, a training process 136, and an agent memory 138. Each worker 132 may include a worker processing unit 142 and a worker memory 144. Generally, agent processing units 134 are described as being implemented with CPUs, while worker processing units 142 are implemented with GPUs. However other configurations are possible. For example, some or all aspects may additionally or alternatively be implemented in cloud computing environments. Cloud computing environments may include models for enabling on-demand network access to a shared pool of configurable computing resources. Such a shared pool of configurable computing resources can be rapidly provisioned via virtualization, then scaled accordingly. A cloud computing model can be composed of various characteristics such as, for example, on-demand self-service, broad network access, resource pooling, rapid elasticity, measured service, and so forth.

Deep learning models (or "networks") comprise a graph of parameterizable layers (or "operators") that together implement a complex nonlinear function. The network may be trained via a set of training data that comprises of pairs of input examples (x) and outputs (y). The desired output is a learned function that is parameterized by weights (w), such that given an input (x), the prediction *f* (x; w) approaches (y).

Applying the function *f* (x; w) is performed by transforming the input (x) layer by layer to generate the output - this process is called inference. In a training setting, this is referred to as the forward pass. Provisioning a network to solve a specific task includes two phases - designing the network structure and training the network's weights. Once designed, the network structure is generally not changed during the training process.

Training iterations start with a forward pass, which is similar to inference but wherein the inputs of each layer are stored. The quality of the result *f* (x; w) of the forward pass is evaluated using a loss function ℓ to estimate the accuracy of the prediction. The following backward pass propagates the loss (e.g., error) from the last layer in the reverse direction. At each parametric (e.g., learnable) layer, the backward pass uses the adjoint of the forward operation to compute a gradient *g* and update the parameters, or weights using a learning rule to decrease ℓ. This process is repeated iteratively for numerous examples until the function *f* (x; w) provides the desired accuracy.

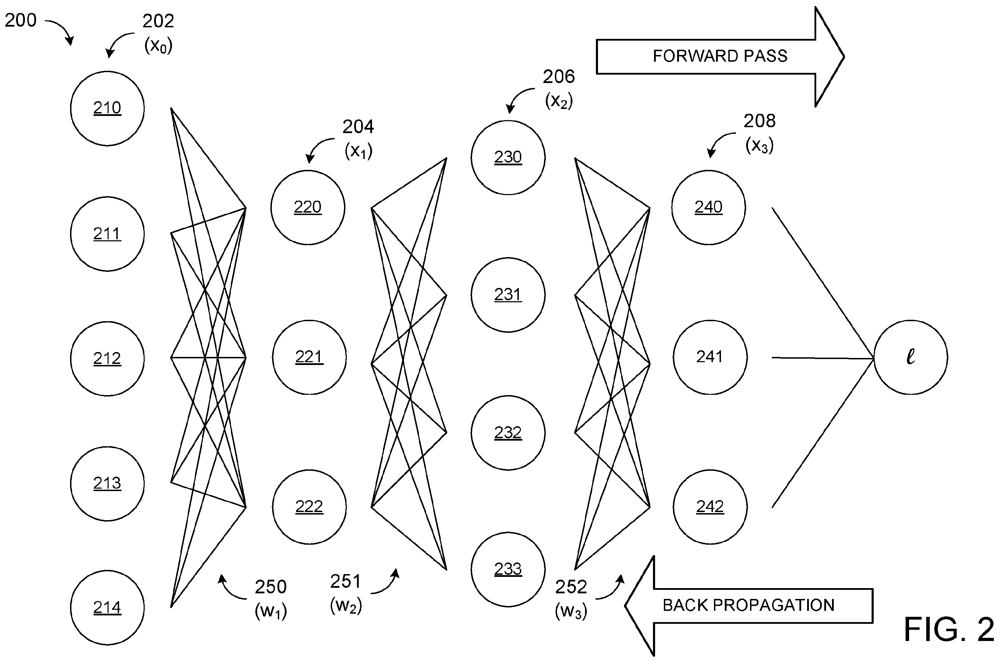

As an example, FIG. 2 schematically shows a multilayer neural network 200, including an input layer (x₀) 202, two hidden layers (x₁) 204 and (x₂) 206, and an output layer (x₃) 208. In this example, input layer 202 includes 5 neurons (210, 211, 212, 213, 214), first hidden layer 204 includes 3 neurons (220, 221, 222), second hidden layer 206 includes 4 neurons (230, 231, 232, 233), and output layer 208 incudes 3 neurons (241, 242, 243).

Neural network 200 includes activation functions, such as rectified linear units (not shown). Neural network 200 may be parameterized by weight matrices w₁ 250, w₂ 251, and w₃ 252 and bias vectors (not shown). Each weight matrix includes a weight for each connection between two adjacent layers. The forward pass may include a series of matrix-vector products *f* (x0; w), where x₀ is the input or feature vector.

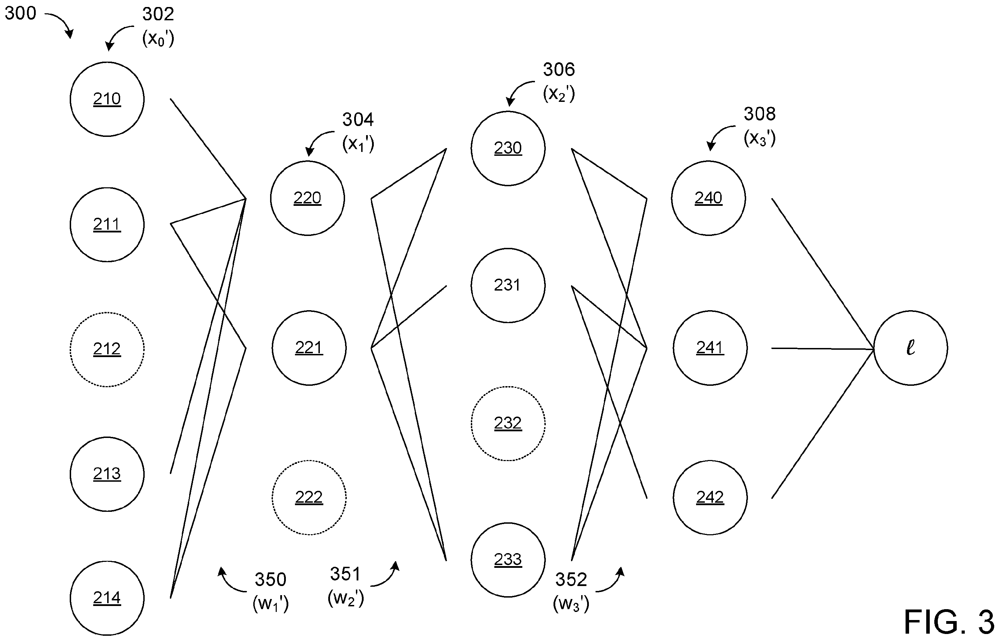

The sizes of deep neural networks such as network 200 are rapidly outgrowing the capacity of hardware to fast store and train them. Sparsity may be applied to reduce the number of network parameters before, during, and after training by pruning edges from the underlying topology. FIG. 3 shows a sparsified version 300 of network 200, comprising hidden layer input layer (x₀') 302, hidden layers (x₁') 304 and (x₂') 306, and output layer (x₃') 308. In this example, the third input feature 212 and all of its adjacent weights are removed (dashed lines) from input layer (x₀') 302. Additionally, hidden neurons 222 and 232 and their weights are removed from hidden layers (x₁') 304 and (x₂') 306, respectively. Various other weights have been removed from sparsified version 300, yielding weight matrices (w₁') 350, (w₂') 351, and (w₃') 352. Removing neurons or input features in this way corresponds to removing rows or columns in the layer weight matrices. Removing individual weights corresponds to removing individual elements of the weight matrices. Sparsity may be induced or arise naturally, and may be applied to other tensors and matrices, such as matrices for activation, error, biases, etc.

For activations, shutting off an activation for a node essentially generates a zero output. Sparsity as applied to activations works the same, e.g., activations that are a higher magnitude are of higher value to the network and are retained. In some examples, the activations approach sparsity naturally, so true sparsity can be added with modest impact.

Sparsifying a weight matrix, or other matrix or tensor effectively reduces the complexity of matrix multiplication events utilizing that matrix. Speed of matrix multiplication directly correlates to the sparsity of the matrix. To gain a certain level of efficiency, and thus an increase in processing speed, the sparsity may be distributed between the two inputs of a matmul. Applying 75% sparsity to a first matrix and 0% sparsity for a second matrix speeds up the process on the order of 4X. Another way to accomplish 4X speed increase is by applying 50% sparsity to the first matrix and 50% sparsity to a second matrix. A balance can thus be made by distributing sparsity between weights and activations, between errors and activations, or to any two input matrices in a matmul operation. The use of regularization and boosting techniques may be used during training to distribute the information across different blocks.

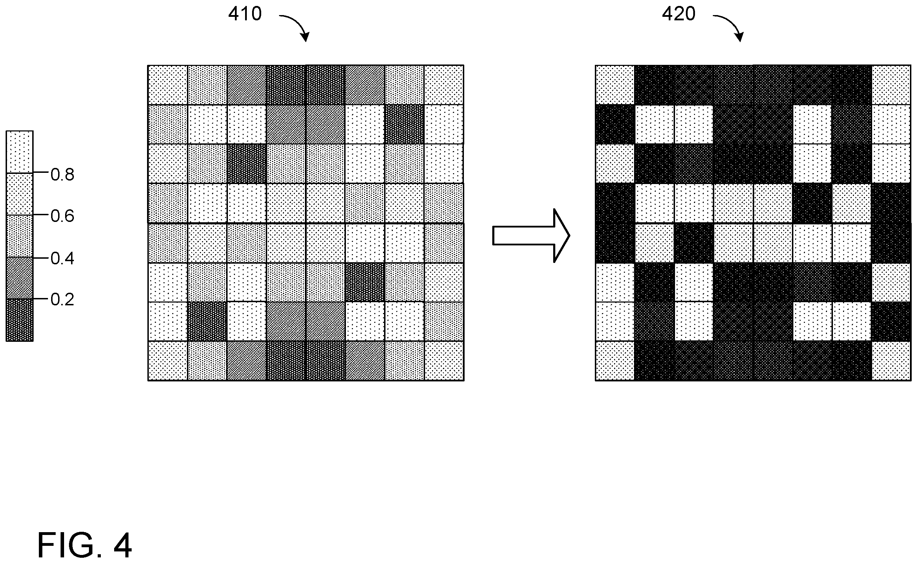

For example, in FIG. 4, a heat map 410 of an 8x8 weight matrix that is going to be sparsified is shown. Lighter shaded blocks represent higher values. A simple high pass filter may be applied to take the highest values to form a sparsified matrix 420. However, using simple filtering like this leaves imbalanced rows and columns. So, while effective at reducing the complexity of any subsequent matrix multiplication, a more deliberate approach to sparsity may simplify the matrix even more, allowing for more targeted matrix compression.

Compressed matrices and/or highly quantized values may be stored as such in memory, then inflated when retrieved and unpacked, e.g., for injecting into digital signal processors for compute. For example, activation sparsity may be used for activation stashing and improved memory storage and bandwidth during training. A higher than generally used learning rate may potentially used to improve model convergence in the presence of activation and/or gradient sparsity.

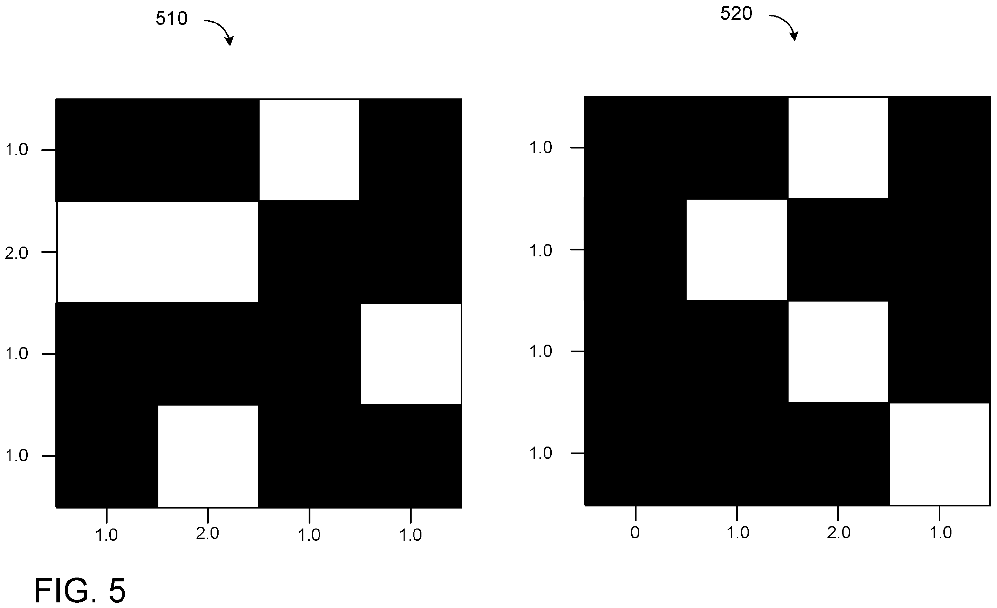

For unstructured sparsity, the mask has few constraints, and can essentially be configured in any random pattern. In FIG. 5, mask 510 is an example of unstructured sparsity. Each black square masks the underlying value to 0. Each white square allows the underlying value to be non-zero. The numbers on the axes of the grid are the counts for that row or column - e.g., how many non-zero values are present in that dimension. For example, the topmost row of mask 510 has one white square (non-zero value) and the second column from the left of mask 510 has two white squares (non-zero values). This convention is used throughout this disclosure.

Unstructured sparsity is typically applied after a network is trained but can also be applied during training in some circumstances. Unstructured sparsity is the least constraining form of sparsity, but its inherent randomicity makes it difficult to accelerate on the hardware level.

The most common constraint on balanced sparsity is N of M constraints. Therein, for a column or row that has M values, only N (N<M) can be non-zero. For example, mask 520 is an example of balanced sparsity with a value of N = 1. Each row of mask 520 has one white square (non-zero value). The columns of mask 520 range from 0 to 2 non-zero values.

Balanced sparsity is thus more constrained than unstructured sparsity but is easier to accelerate with hardware because the hardware can anticipate what to expect from each constrained row or column. The known constraints can be pre-loaded into the hardware. The optimal configurations for applying balanced sparsity may be based on both the complexity of the artificial intelligence application and specifics of the underlying hardware. Balanced sparsity does not, in and of itself, restrict the small-world properties of the weights after convergence.

Herein, most examples may be considered balanced random fine grain sparsity. In this context, fine grain means that only a portion of the tensor is sparsified, while balanced means that all blocks (e.g., rows, columns) have the same level of sparsity, but within each block the pattern is random. This is opposed to unstructured sparsity, wherein the size of each sparsity block is equal to size of the tensor. As block size increases, so does fidelity, as different configurations can be represented with more flexibility. Applying balanced sparsity with a large enough block size effectively approximates unstructured sparsity, at least from a representation standpoint. However, there are diminishing returns as block size increases past a threshold. Thus, balanced random fine grain sparsity represents an opportunity to establish a good balance between hardware implementation costs and accuracy.

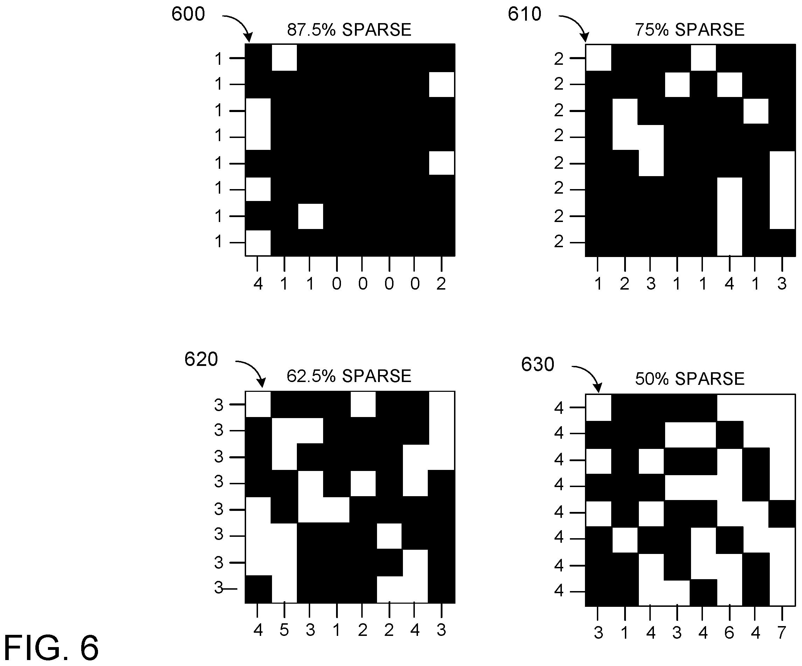

Further, balanced sparsity is scalable to different sparsity levels. As an example, FIG. 6 shows balanced sparsity masks of size M=8x8. Mask 600 has an N of 1 along rows, yielding a mask with 87.5% sparsity. Mask 610 has an N of 2 along rows, yielding a mask with 75% sparsity. Mask 620 has an N of 3 along rows, yielding a mask with 50% sparsity. Mask 630 has an N of 4 along rows, yielding a mask with 50% sparsity. Balanced sparsity can be applied to weights, activations, errors, and gradients and may also have a scalable impact on training through selecting which tensors to sparsify.

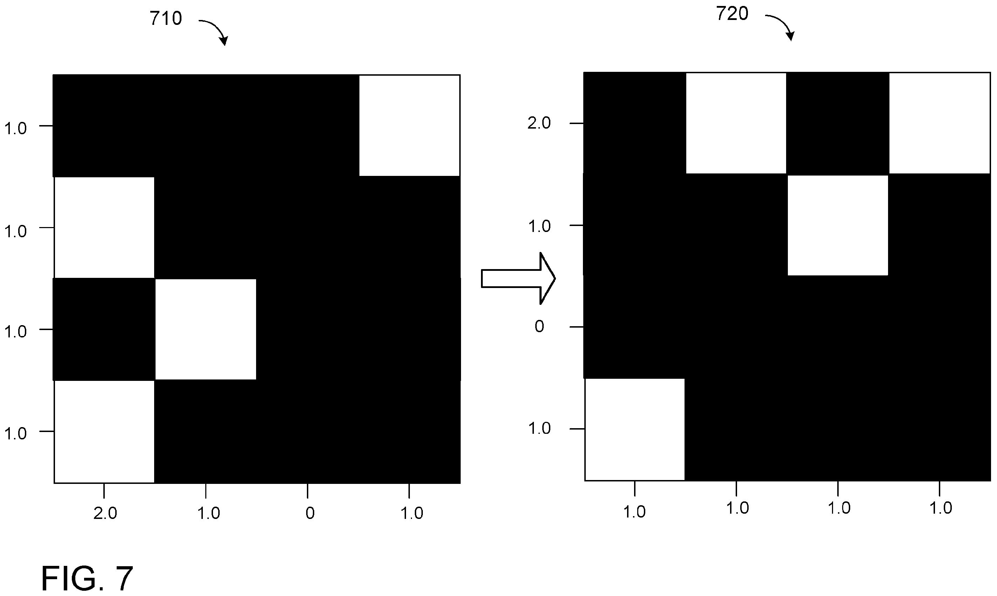

However, as weights must be transposed during backpropagation, the sparsity masks must account for this transposition. However, even for simple 2-dimensional matrices such as those depicted in FIGs. 5 and 6, finding a 2-dimensional constraint that's transposable is challenging. FIG. 7 shows an N of M (1 of 4) sparsity mask 710 and its associated transpose mask 720. Even in this modest example, the row constraints for transpose mask 720 are no longer balanced as are the rows in mask 710.

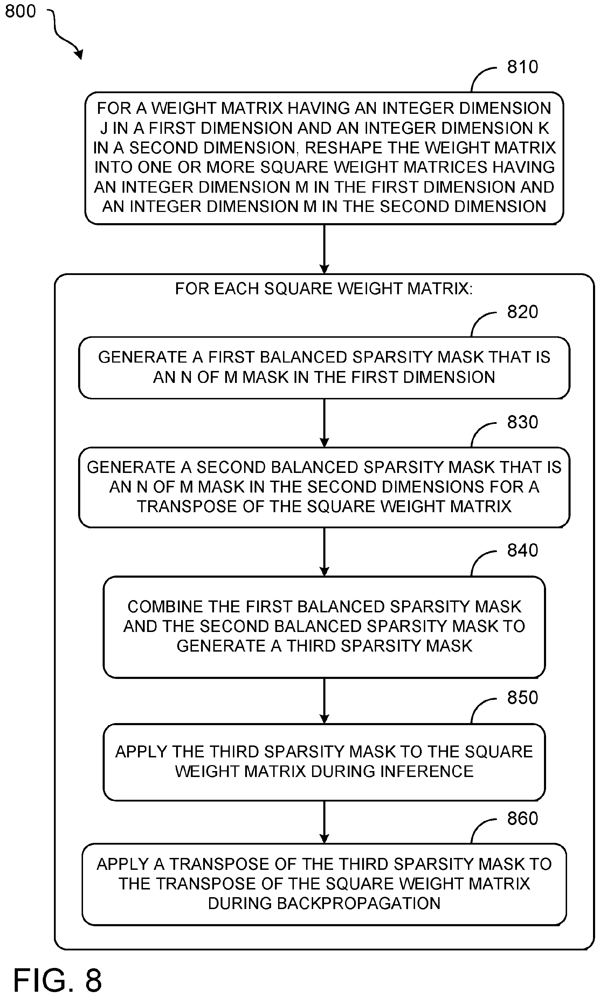

One approach to quickly solving unbalanced sparsity for transposed matrices is to apply dual N of M constraints. In the example shown in FIG. 8, two N of M masks are derived- one of the target matrix and one of its transpose, yielding one mask with N of M sparsity in the row dimension, and a second mask with N of M sparsity in the column dimension. The two derived masks are then combined, generating a mask will have less than or equal to N of M non-zero parameters in both the row and column dimension, making the mask transposable, and enabling sparsity to be applied to the weight matrix in each layer during inference and backpropagation.

FIG. 8 shows an example method 800 for training a neural network. Method 800 may be executed by one or more computing systems, such as systems 100 and/or 200. More specifically, method 800 may be executed by a training supervisor, such as training supervisor 122, in communication with a plurality of nodes that can be configured to train a machine-learning model. The technical effect of implementing such a method is an improvement in the use of computing resources.

At 810, method 300 includes, for a weight matrix having an integer dimension J in a first dimension and an integer dimension K in a second dimension, reshaping the weight matrix into one or more square weight matrices having an integer dimension M in the first dimension and an integer dimension M in the second dimension. If J is already equal to K, the weight matrix may not need to be reshaped to perform elementwise multiplication. In some examples, to maintain all of the values within the weight matrix, two or more square matrices may be generated with dimensions MxM, M'xM', etc.

Each resulting MxM square weight matrix may then be processed individually. For each square weight matrix, at 820, method 800 includes generating a first balanced sparsity mask that is an N of M mask in the first dimension. At 830, method 800 includes generating a second balanced sparsity mask that is an N of M mask in the second dimensions for a transpose of the weight matrix. In some examples, the first balanced sparsity mask and the second balanced sparsity mask are generated based at least on a top-K function.

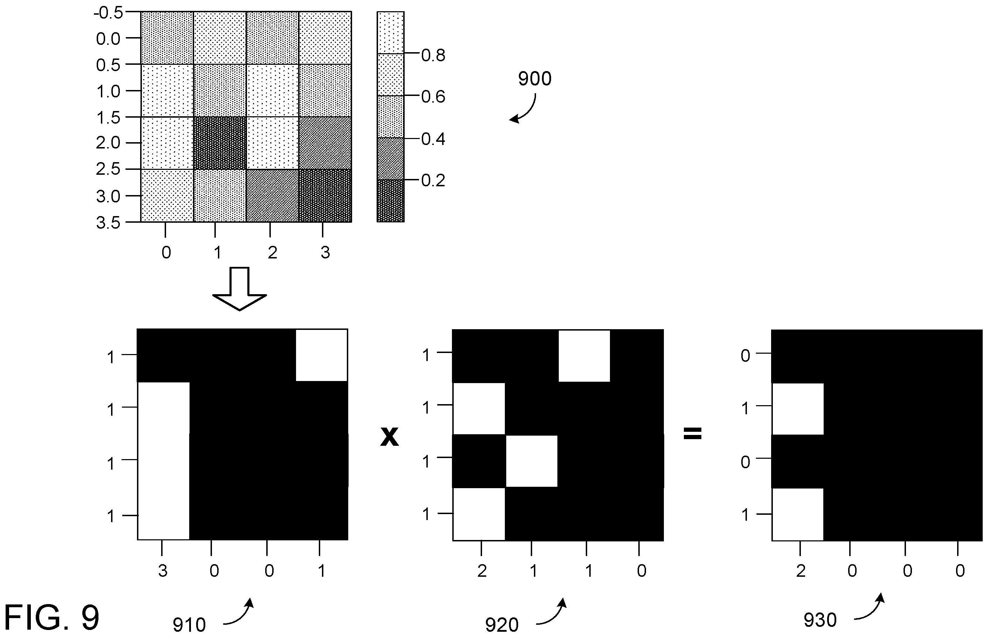

For example, in FIG. 9, a heat map 900 of an original square weight matrix that is going to be sparsified is shown. Lighter shaded blocks represent higher values. For the first sparsity matrix 910, the highest values are taken to form the target matrix. In other words, the filter holes of the mask correspond to the absolute magnitude of the values in the original block. Then, an N of M mask is derived from the transpose 920 of the first sparsity matrix 910.

At 840, method 800 includes combining the first balanced sparsity mask and the second balanced sparsity mask to generate a third sparsity mask. For example, combining the first sparsity mask and the second sparsity mask to generate the third sparsity mask may include combining the first sparsity mask and the second sparsity mask using an elementwise Boolean AND operation.

As shown in FIG. 9, matrices 910 and 920 are combined to generate matrix 930. For example, the matrices may be combined using a Boolean AND function. Matrix 930 may thus transpose either way, and at most has the N of M constraints in either transposition. As the mask is only transposed, not altered, it can be cached separately during the forward pass and re-used or applied to the weight matrix to create a final sparse weight matrix, which can also be cached. During backpropagation, the cached mask/weights can be used directly without the need to recompute a new mask.

Other techniques for finding transposable N of M masks are inherently slow, using a linear solver or greedy algorithm that gets exponentially slower as unstructured sparsity is approached through looser constraints and larger block sizes. In these examples, the methods can utilize a basic top-K classification, which scales well for modestly sized matrices. The tradeoff for the speed gained in determining such transposable masks is that sometimes the mask ends up underfilled. Such a mask may have fewer than the maximum allowed number of non-zero values. Where the original mask and the transpose mask differ, values may be sacrificed, and potentially influential weights may be lost.

As such, in some examples, method 800 may further include setting a desired output sparsity for the third sparsity mask and generating the first and second balanced sparsity masks with a sparsity greater than the desired output sparsity. For example, a desired output sparsity may be set at 50%. The first and second balanced sparsity masks may then be overprovisioned at 70% or 75% sparsity. Additional top-K functions may be performed to obtain the overprovisioned mask. As such, the operator may balance the costs of any additional hardware complexity with the expected increase in accuracy. For examples wherein such filtering is applied at each iteration, the simplicity of calculating the mask offsets any loss in accuracy, particularly compared with approaches that require calculating a multi-order gradient or that may take multiple iterations to derive the most effective mask.

At 850, method 800 includes applying the third sparsity mask to the square weight matrix during inference. At 850, method 800 includes applying a transpose of the third sparsity mask to the transpose of the square weight matrix during backpropagation. Further, method 800 may include applying N of M sparsity to one or more of an activation tensor and an error tensor during the backpropagation. This ensures that backpropagation is fully compute sparse. The sparsity maybe applied to either matrix, depending on system parameters, modalities, and dataset properties. While the weight matrix is used for both forward and back propagation and thus must be transposed, the activations do not need to be transposed, and the error information is specific to the backwards pass.

Sparse training may also be used in an unstructured way, improving the training fidelity compared to structured sparse training. Memory usage and compute resources required during training may be reduced. However, in order to do so, the associated hardware must be extremely specialized, making it intractable to support non-sparse training on the same hardware.

N of M sparsity is easier to accelerate than unstructured sparsity both in terms of memory access and compute. However, generating transposable masks may apply an additional constraint on the weight, error, and/or activation matrices. This may further reduce training performance.

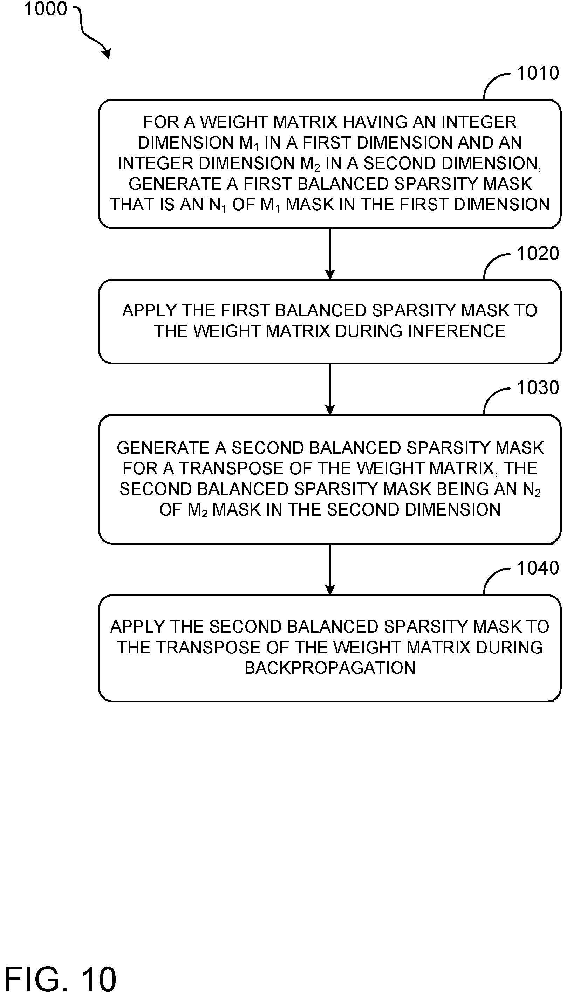

FIG. 10 shows an example method 1000 for training a neural network that enables structured sparse training to match the performance of N of M sparsity if the balance constraint of the transposition is not taken into account. Such an approach may remain usable on non-sparse specific accelerator designs. Such an approach may be referred to as dynamic masking. Dynamic masking removes the transposability constraints on the weight mask, making structured, sparse training more competitive with unstructured sparse training. Generating masks for dynamic sparsity may also be up to one thousand times faster or more than iteratively creating a perfectly optimized transposable mask using linear programming. This increases the fidelity of training compared to existing sparse training methodologies such as transposable masks, while still being computationally sparse during backpropagation, and without the added compute expense of generating complex masks for each pass or set of passes.

Method 1000 may be executed by one or more computing systems, such as systems 100 and/or 200. More specifically, method 1000 may be executed by a training supervisor, such as training supervisor 122, in communication with a plurality of nodes that can be configured to train a machine-learning model. The technical effect of implementing such a method is an improvement in the use of computing resources.

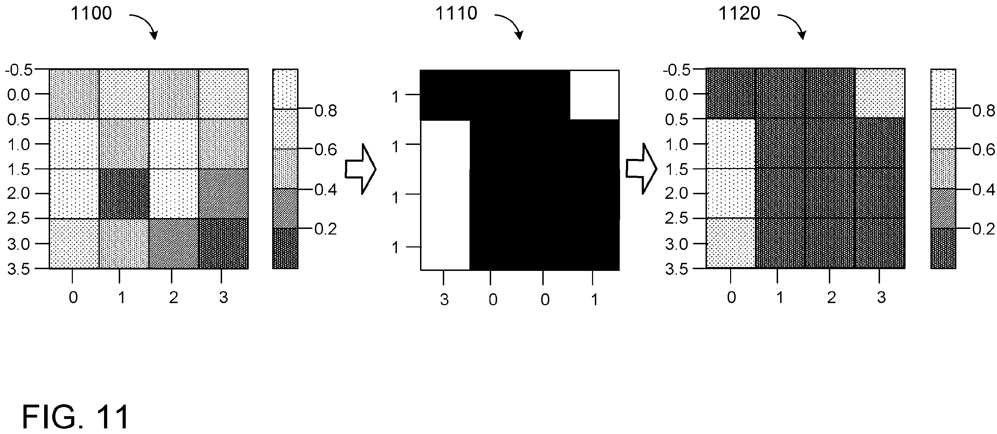

At 1010, method 1000 includes, for a weight matrix having integer dimensions M₁ in a first dimension and M₂ in a second dimension, generating a first balanced sparsity mask that is an N₁ of M₁ mask in the first dimension. For example, in FIG. 11, a heat map of the original weight matrix 1100 that is going to be sparsified is shown. An N₁ of M₁ mask, where N₁ = 1 along rows and M₁ = 4 is applied to generate sparse weight matrix 1120.

Returning to FIG. 10, at 1020, method 1000 includes applying the first balanced sparsity mask to the weight matrix during inference. The mask generated during forward pass may simply be a standard N of M mask, but it is not cached. Instead, during backpropagation, a new N of M mask is created using the transposed weight matrix and applied, resulting in a row-wise N of M sparse matrix. This matrix will have exactly N of M non-zero parameters.

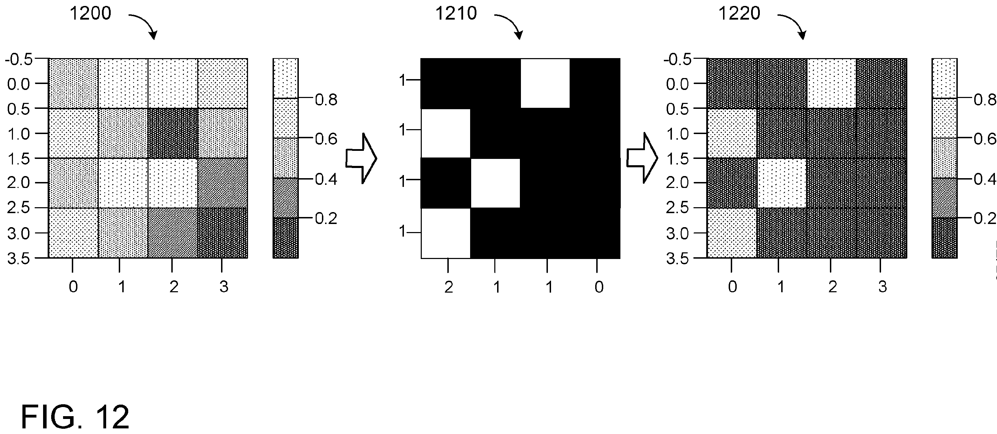

At 1030, method 1000 includes generating a second balanced sparsity mask for a transpose of the weight matrix, the second balanced sparsity mask being an N₂ of M₂ mask in the second dimension. For example, in FIG. 12, a heat map is shown for a weight matrix 1200 that is a transpose of weight matrix 1100. An N₂ of M₂ mask, where N = 1 along rows and M = 4 is applied to generate sparse weight matrix 1220.

In some examples, the weight matrix will be configured such that M₁ = M₂. In some examples, the first balanced sparsity mask and the second balanced sparsity mask may use the same integer value for N₁ and N₂. In other words, the same principles and parameters for row selection apply to the second balanced sparsity mask as to the first balanced sparsity mask. In some examples, the first balanced sparsity mask and the second balanced sparsity mask may be generated based at least on a top-K function. In some examples, the second balanced sparsity mask may be a transpose of the first balanced sparsity mask.

At 1040, method 1000 includes applying the second balanced sparsity mask to the transpose of the square weight matrix during backpropagation. In other words, the second balanced sparsity mask may be used to perform gradient calculations during backpropagation. As such, there is no need to use a lossy approximation of transposable sparsity.

Performing masking in this way does not necessarily represent a straight through estimation of the gradient. Some influential weights, for example, may be incorrectly passed through that were not used during inference as well as the converse. However, any error incurred should have marginal impact on training accuracy or loss as compared to using an imbalanced masking scheme that cannot be accelerated at the hardware level. Dynamic masking may significantly increase the fidelity of the sparse matrix to the original, dense matrix resulting in marginal impact to training as opposed to using a technically correct, yet unbalanced, transposed matrix from the forward pass.

As sparsity itself is an approximation of dense training, additional approximation may not impact the training significantly. In particular, during the initial stages of training, the model is performing more exploratory operations, working at a much courser grain. As such, small amounts of noise are overwhelmed by the quantization that already occurs. Sparsity can be used on top of quantization to turbocharge the compression schemes. As such, sparsity can improve to not only compute utilization, but also memory storage/bandwidth, and communication.

Towards the end of the training, adding noise or sparsity can cause the model to drift from the local minimum in a promising subspace. As such, more discernment may be taken in how much noise and sparsity is being added. An option for maintaining speed and compute resources at the beginning of training, where precision is less critical, but improving accuracy towards later training stages, is to perform sparse ladder training.

In any of the systems and methods described herein for sparse training, sparse ladder training may be used to speed up and decrease the cost of training without impacting the accuracy of the resulting trained model. Sparse ladder training may progressively decrease, increase, or cycle the sparsity during training as appropriate for the training goals. For example, at the beginning of training, while the network is exploring, and can be trained with a relatively high sparsity, thus realizing an increase in speed without impacting the final performance level. If and when the high sparsity impacts performance, e.g., the training slowing down, then sparsity can be decreased during training.

Sparse ladder training may generate increased efficiency over standard dense training by taking advantage of how quickly the loss drops at the outset of training. As the network is initialized randomly, the initial progress is very fast at the early stages of learning, regardless of the actual capacity of the network. As training continues, the network begins to fill its capacity, and learning progresses more slowly. During the initial fast learning phase, a high sparsity level can be used to speed up training without a significant impact to the loss. As the network reaches its capacity, the sparsity may be reduced, thus increasing capacity, and further improving the model loss. This procedure can be repeated until the network performs as a fully dense network, while using far less computation than fully dense training.

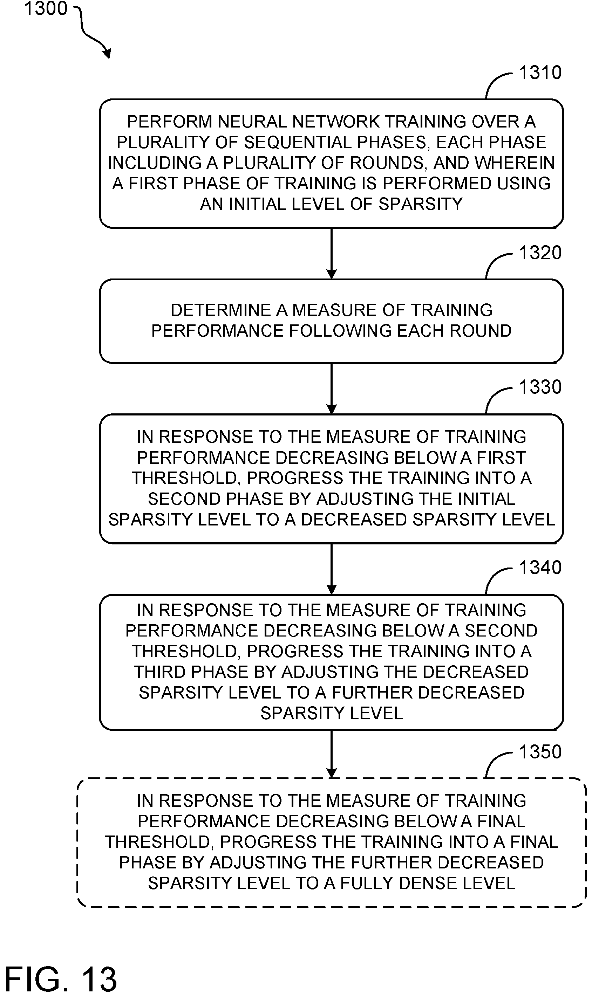

FIG. 13 shows an example method 1300 for sparse ladder training. Method 1300 may be executed by one or more computing systems, such as systems 100 and/or 200. More specifically, method 1300 may be executed by a training supervisor, such as training supervisor 122, in communication with a plurality of nodes that can be configured to train a machine-learning model. The technical effect of implementing such a method is an improvement in the use of computing resources.

At 1310, method 1300 includes performing training over a plurality of sequential phases, each phase including a plurality of rounds, and wherein a first phase training is initially performed using an initial level of sparsity. As one example, early stages of training may be sped up by using high sparsity levels (e.g., 87.5%, 75%) for the weights and/or for one or both of the activation and error tensors. The sparsity level and tensors selected to be sparsified may be considered tunable hyperparameters that can be adjusted to achieve a balance between trade training speed and training accuracy.

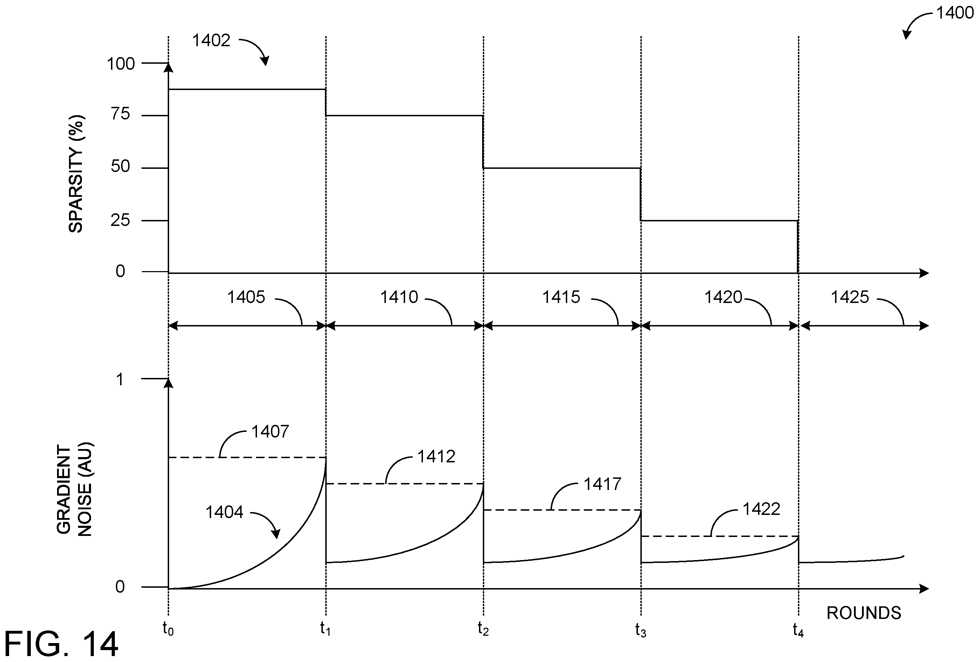

As an example, FIG. 14 shows a hypothetical timing diagram 1400 for performing sparse ladder training. Timing diagram 1400 includes plot 1402, indicating a level of sparsity over a plurality of successive training rounds, and plot 1404, indicating gradient noise (normalized to arbitrary units) over the plurality of successive training rounds. An increase in gradient noise correlates to a decrease in training performance. At time t₀, training is performed in a first phase 1405 with a sparsity level of 87.5%.

Returning to FIG. 13, at 1320, method 1300 includes determining a measure of training performance following each round. Sparsity levels may be switched based on a threshold change in gradient noise, a statistic that may be significantly and proportionally impacted by sparsity. The threshold change may be a deviation from a known baseline for a specific model type. Such an increase may correspond with training that performs worse than a representative baseline, and thus would benefit from a switch to a lower level of sparsity. As such, a maximum allowed threshold for gradient noise may be set at one or more layers of the network. The degree of sparsity can thus be dynamically switched accordingly in order to maintain a desired training performance as compared to a dense baseline. Additionally or alternatively, the rate of change in the loss will decrease (e.g., flatten out), potentially to within a threshold of 0, as training progresses, and may be used as an indicator to switch sparsity levels.

**In** some examples, a laddering schedule may be selected prior to initiating training, with switching of sparsity levels performed at automated scheduling intervals, e.g., at the conclusion of a predetermined number of iterations. Such a schedule may be determined based on an analysis of power laws for sparse networks of differing sizes such that different levels of sparsity are implemented based on a tradeoff between the network's performance and capacity, and thus how well the sparse training can recover the performance of a fully dense training. By noting where sparse training alters the power laws as compared to dense networks, such as the power law for training to efficiency, a laddering schedule can be built that optimizes both sparsity and total compute required.

Returning to FIG. 13, at 1330, method 1300 includes, in response to the measure of training performance decreasing below a first threshold, progressing the training into a second phase by adjusting the initial sparsity level to a decreased sparsity level. As an example, sparsity levels may be decreased (e.g., N of M is increased) from 75% to 50% part way through the training process, and training recommences. With the decreased sparsity, the network capacity is higher, and the loss may begin to drop once more.

For example, as shown in FIG. 14, gradient noise increases to first threshold 1407 at time t₁. As such, training enters second phase 1410 and the sparsity level is decreased from 87.5% to 75%. A new gradient noise threshold 1412 is established for measuring training performance in second phase 1410.

Returning to FIG. 13, at 1340, method 1300 includes, in response to the measure of training performance decreasing below a second threshold, progressing the training into a third phase by adjusting the decreased sparsity level to a further decreased sparsity level.

For example, as shown in FIG. 14, gradient noise increases to second threshold 1412 at time t₂. As such, training enters third phase 1415 and the sparsity level is decreased from 75% to 50%. A new gradient noise threshold 1417 is established for measuring training performance in third phase 1415. Any number of phases and thresholds may be established. In some examples, a static threshold may be applied, rather than an adjustable threshold, as shown in FIG. 14. As shown, gradient noise increases to third threshold 1417 at time t₃. As such, training enters fourth phase 1420 and the sparsity level is decreased from 50% to 25%. A new gradient noise threshold 1422 is established for measuring training performance in fourth phase 1420.

Returning to FIG. 13, at 1350, method 1300 optionally includes, in response to the measure of training performance decreasing below a final threshold, progressing the training into a final phase by adjusting the further decreased sparsity level to a fully dense level. If fully dense performance is desired, then a small fully dense fine tune can be used to recover the full accuracy of the network. In some examples, such as for very large networks or where lower sparsity levels have been applied, a dense fine-tuning stage is not needed, and sparse performance reasonably approximates dense performance. As shown in FIG. 14, gradient noise increases to fourth threshold 1422 at time t₄. As such, training enters fifth phase 1425 and the sparsity level is decreased from 25% to 0%. By adjusting sparsity in this way, accuracy in training is progressively recovered at each stage where a less sparse matrix is used, early-stage compute levels are reduced by using higher levels of sparsity.

Laddering may be applied to one or more of the passes, e.g., only the backpropagation pass. For example, the backward pass may be significantly more susceptible to sparsity than inference. In one example, a network may be initially trained at 75% sparsity in both forward and backward passes. Subsequently, the sparsity for the backward pass can be stepwise decreased independently of the forward pass. In this way, training performance is improved in terms of loss but without necessitating that the forward pass also be run slower at a lower sparsity level. This may allow for training sparse networks in a single iteration without the need for a separate dense fine-tuning step to recover accuracy lost due to sparsity.

Weights are generally easy to sparsify, and activations may be less sensitive to sparsity than error terms and backpropagation, for example. Further, depending on which platform the model is being prepared for, different parameters and directions may be sparsified at different degrees. In scenarios where the model is being trained to perform inference at sparse settings, it may be desirable to perform sparse ladder training on only the backward pass (e.g., error terms, gradient terms, activations), while maintaining the forward pass in a fixed degree of sparsity. As such, once training is completed, the model can be implemented in a sparse configuration. If the model is being trained to perform dense inference, sparse ladder training may be applied to both the backward pass and forward pass to increase accuracy at all levels.

In particular, by implementing sparse ladder training, savings are realized terms of compute and memory in terms of time. For example, at 75% sparsity, training steps may be completed up to four times faster than for equivalent steps in fully dense training, depending on the hardware design. By laddering with lower sparsity, the baseline performance level can be reached in a reduced total time period.

Implementations for sparse training described herein have the technical effect of reducing computing costs in training and development of machine learning models, thereby reducing the costs for consumers to obtain such models. Sparse neural networks that have been trained with sparsity can be used directly in sparse inference, which is often required to meet latency and cost goals, without any extra fine-tuning stages.

The end-user may be enabled to control the degree of sparsity during inference. Depending on the intended hardware platform, network, or systems for implementing the trained model, training constraints may be adjusted accordingly during the forward pass of training. Activation and error terms can be sparsified without concern for transposition. As such, the sparsity levels of those terms can be set based on a trade-off of speed vs fidelity as compared to dense training. The technical effect of this approach is a more customizable software package that can be attained without costly, time consuming, dense training procedures.

In some embodiments, the methods and processes described herein may be tied to a computing system of one or more computing devices. In particular, such methods and processes may be implemented as a computer-application program or service, an application-programming interface (API), a library, and/or other computer-program product.

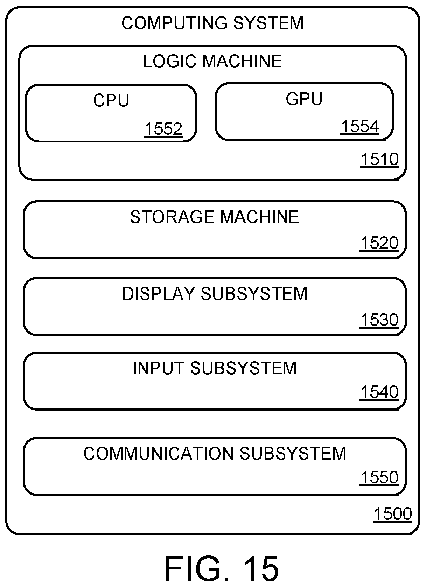

FIG. 15 schematically shows a non-limiting embodiment of a computing system 1500 that can enact one or more of the methods and processes described above. Computing system 1500 is shown in simplified form. Computing system 1500 may take the form of one or more personal computers, server computers, tablet computers, home-entertainment computers, network computing devices, gaming devices, mobile computing devices, mobile communication devices (e.g., smart phone), and/or other computing devices. Systems 100, 200 and 300 may be examples of computing system 1500.

Computing system 1500 includes a logic machine 1510 and a storage machine 1520. Computing system 1500 may optionally include a display subsystem 1530, input subsystem 1540, communication subsystem 1550, and/or other components not shown in FIG. 15.

Logic machine 1510 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

The logic subsystem may include one or more CPUs 1552 in addition to one or more GPUs 1554, and the one or more CPUs 1552 may be configured to send executable instructions and/or data to the one or more GPUs 1554. Responsive to processing of the instructions and/or data by the one or more GPUs 1554, the CPUs 1552 may receive result data from the one or more GPUs 1554. In this manner, the logic subsystem may execute a large number of computations in parallel via the GPUs. In particular, the logic subsystem may efficiently perform method 800 of FIG. 8, method 1000 of FIG. 10, and method 1300 of FIG. 13.

The present disclosure refers to a GPU as a computing device well-suited for distributed learning processes, because a GPU is configured to execute a very large number of multiple replicated instances of the same program (e.g., a GPU kernel) in parallel, where each instance of the program receives and works on different input data. However, it is to be understood that other aspects of a logic subsystem may be configured to provide the same or similar benefits. As such, it is to be understood that any discussion of GPUs also applies to other suitable computing components, and the present disclosure is in no way limited to performing method 800, 1000, 1300, or any other aspect of training a machine-learning model on GPUs to the exclusion of other suitable computing devices.

Storage machine 1520 includes one or more physical devices configured to hold instructions executable by the logic machine to implement the methods and processes described herein. When such methods and processes are implemented, the state of storage machine 1520 may be transformed-e.g., to hold different data.

Storage machine 1520 may include removable and/or built-in devices. Storage machine 1520 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 1520 may include volatile, nonvolatile, dynamic, static, read/write, read-only, random-access, sequential-access, location-addressable, file-addressable, and/or content-addressable devices.

It will be appreciated that storage machine 1520 includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 1510 and storage machine 1520 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1500 implemented to perform a particular function. In some cases, a module, program, or engine may be instantiated via logic machine 1510 executing instructions held by storage machine 1520. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

It will be appreciated that a "service," as used herein, is an application program executable across multiple user sessions. A service may be available to one or more system components, programs, and/or other services. In some implementations, a service may run on one or more server-computing devices.

When included, display subsystem 1530 may be used to present a visual representation of data held by storage machine 1520. This visual representation may take the form of a graphical user interface (GUI). As the herein described methods and processes change the data held by the storage machine, and thus transform the state of the storage machine, the state of display subsystem 1530 may likewise be transformed to visually represent changes in the underlying data. Display subsystem 1530 may include one or more display devices utilizing virtually any type of technology. Such display devices may be combined with logic machine 1510 and/or storage machine 1520 in a shared enclosure, or such display devices may be peripheral display devices. When included, input subsystem 1540 may comprise or interface with one or more user-input devices such as a keyboard, mouse, touch screen, or game controller. **In** some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 1550 may be configured to communicatively couple computing system 1500 with one or more other computing devices. Communication subsystem 1550 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 1500 to send and/or receive messages to and/or from other devices via a network such as the Internet.

In one example, a method for training operating a neural network comprises, for a weight matrix having an integer dimension M₁ in a first dimension and an integer dimension M₂ a second dimension, generating a first balanced sparsity mask that is an N₁ of M₁ mask in the first dimension; applying the first balanced sparsity mask to the weight matrix during inference; generating a second balanced sparsity mask for a transpose of the weight matrix, the second balanced sparsity mask being an N₂ of M₂ mask in the second dimension; and applying the second balanced sparsity mask to the transpose of the weight matrix during backpropagation. In such an example, or any other example, N₁ and N₂ are additionally or alternatively the same integer value. In any of the preceding examples, or any other example, the second balanced sparsity mask is additionally or alternatively a transpose of the first balanced sparsity mask. In any of the preceding examples, or any other example, the first balanced sparsity mask and the second balanced sparsity mask are additionally or alternatively generated based at least on a top-K function. In any of the preceding examples, or any other example, the training is additionally or alternatively performed over a plurality of sequential phases, each phase including a plurality of rounds, and wherein a first sequential phase of training is additionally or alternatively performed using an initial level of sparsity. In any of the preceding examples, or any other example, the method additionally or alternatively comprises determining a measure of training performance following each round. In any of the preceding examples, or any other example, the method additionally or alternatively comprises, in response to the measure of training performance decreasing below a first threshold, progressing the training into a second phase by adjusting the initial sparsity level to a decreased sparsity level. In any of the preceding examples, or any other example, the method additionally or alternatively comprises in response to the measure of training performance decreasing below a second threshold, progressing the training into a third phase by adjusting the decreased sparsity level to a further decreased sparsity level. The technical effect of implementing such a method is an improvement in the use of computing resources.

In another example, a method for training a neural network, comprises, for a weight matrix having an integer dimension J in a first dimension and an integer dimension K in a second dimension, reshaping the weight matrix into one or more square weight matrices having an integer dimension M in the first dimension and an integer dimension M in the second dimension; for each square weight matrix: generating a first balanced sparsity mask that is an N of M mask in the first dimension; generating a second balanced sparsity mask that is an N of M mask in the second dimensions for a transpose of the square weight matrix; combining the first balanced sparsity mask and the second balanced sparsity mask to generate a third sparsity mask; applying the third sparsity mask to the square weight matrix during inference; and applying a transpose of the third sparsity mask to the transpose of the square weight matrix during backpropagation. In such an example, or any other example, the first balanced sparsity mask and the second balanced sparsity mask are additionally or alternatively generated based at least on a top-K function. In any of the preceding examples, or any other example, the method additionally or alternatively comprises setting a desired output sparsity for the third sparsity mask; and generating the first and second balanced sparsity masks with a sparsity greater than the desired output sparsity. In any of the preceding examples, or any other example, combining the first sparsity mask and the second sparsity mask to generate the third sparsity mask additionally or alternatively includes combining the first sparsity mask and the second sparsity mask using an elementwise Boolean AND operation. In any of the preceding examples, or any other example, the method additionally or alternatively comprises applying N of M sparsity to one or more of an activation tensor and an error tensor during the backpropagation. In any of the preceding examples, or any other example, the training is additionally or alternatively performed over a plurality of sequential phases, each phase including a plurality of rounds, and wherein a first phase training is additionally or alternatively performed using an initial level of sparsity. In any of the preceding examples, or any other example, the method additionally or alternatively comprises determining a measure of training performance following each round. In any of the preceding examples, or any other example, the method additionally or alternatively comprises, in response to the measure of training performance decreasing below a first threshold, progressing the training into a second phase by adjusting the initial sparsity level to a decreased sparsity level. In any of the preceding examples, or any other example, the method additionally or alternatively comprises in response to the measure of training performance decreasing below a second threshold, progressing the training into a third phase by adjusting the decreased sparsity level to a further decreased sparsity level. The technical effect of implementing such a method is reducing computing costs in training and development of machine learning models.

In yet another example, a computing system for operating a deep neural network comprises one or more logic machines; and one or more storage machines, each storage machine holding instructions, that when executed by the one or more logic machines cause the computing system to, for a weight matrix having integer dimensions M in a first dimension and M in a second dimension, generate a first balanced sparsity mask that is an N of M mask in the first dimension; apply the first balanced sparsity mask to the weight matrix during a forward pass; generate a second balanced sparsity mask for a transpose of the weight matrix, the second balanced sparsity mask being an N of M mask in the second dimension; and apply the second balanced sparsity mask to the transpose of the weight matrix during a backwards pass. In such an example, or any other example, the second balanced sparsity mask is additionally or alternatively a transpose of the first balanced sparsity mask. In any of the preceding examples, or any other example, the storage machine additionally or alternatively holds instructions that when executed by the one or more logic machines cause the computing system to perform the training over a plurality of sequential phases, each phase including a plurality of rounds, and wherein a first phase training is performed using an initial level of sparsity; determine a measure of training performance following each round; and in response to the measure of training performance decreasing below a first threshold, progress the training into a second phase by adjusting the initial sparsity level to a decreased sparsity level. The technical effect of implementing such a method is an improvement in the use of computing resources.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

### Aspects of the invention are disclosed in the following numbered clauses:

1. A method for training a neural network, comprising:
   for a weight matrix having an integer dimension M₁ in a first dimension and an integer dimension M₂ a second dimension, generating a first balanced sparsity mask that is an N₁ of M₁ mask in the first dimension;
   applying the first balanced sparsity mask to the weight matrix during inference;
   generating a second balanced sparsity mask for a transpose of the weight matrix, the second balanced sparsity mask being an N₂ of M₂ mask in the second dimension; and
   applying the second balanced sparsity mask to the transpose of the weight matrix during backpropagation.
2. The method of clause 1, wherein N₁ and N₂ are the same integer value.
3. The method of clause 1, wherein the second balanced sparsity mask is a transpose of the first balanced sparsity mask.
4. The method of clause 1, wherein the first balanced sparsity mask and the second balanced sparsity mask are generated based at least on a top-K function.
5. The method of clause 1, wherein the training is performed over a plurality of sequential phases, each phase including a plurality of rounds, and wherein a first sequential phase of training is performed using an initial level of sparsity.
6. The method of clause 5, further comprising:
   determining a measure of training performance following each round.
7. The method of clause 6, further comprising:
   in response to the measure of training performance decreasing below a first threshold, progressing the training into a second phase by adjusting the initial sparsity level to a decreased sparsity level.
8. The method of clause 7, further comprising:
   in response to the measure of training performance decreasing below a second threshold, progressing the training into a third phase by adjusting the decreased sparsity level to a further decreased sparsity level.
9. A computing system for training a deep neural network, comprising:
   one or more logic machines; and
   one or more storage machines, each storage machine holding instructions, that when executed by the one or more logic machines cause the computing system to:
      for a weight matrix having an integer dimension J in a first dimension and an integer dimension K in a second dimension, reshape the weight matrix into one or more square weight matrices having an integer dimension M in the first dimension and an integer dimension M in the second dimension;
      for each square weight matrix:
         generate a first balanced sparsity mask that is an N of M mask in the first dimension;
         generate a second balanced sparsity mask that is an N of M mask in the second dimensions for a transpose of the square weight matrix;
         combine the first balanced sparsity mask and the second balanced sparsity mask to generate a third sparsity mask;
         apply the third sparsity mask to the square weight matrix during inference; and
         apply a transpose of the third sparsity mask to the transpose of the square weight matrix during backpropagation.
10. The computing system of clause 9, wherein the first balanced sparsity mask and the second balanced sparsity mask are generated based at least on a top-K function.
11. The computing system of clause 9, wherein the storage machine further holds instructions, that when executed by the one or more logic machines cause the computing system to:
   set a desired output sparsity for the third sparsity mask; and
   generate the first and second balanced sparsity masks with a sparsity greater than the desired output sparsity.
12. The computing system of clause 9, wherein combining the first sparsity mask and the second sparsity mask to generate the third sparsity mask includes combining the first sparsity mask and the second sparsity mask using an elementwise Boolean AND operation.
13. The computing system of clause 9, wherein the storage machine further holds instructions, that when executed by the one or more logic machines cause the computing system to:
   apply N of M sparsity to one or more of an activation tensor and an error tensor during the backpropagation.
14. The computing system of clause 9, wherein the training is performed over a plurality of sequential phases, each phase including a plurality of rounds, and wherein a first phase training is performed using an initial level of sparsity.
15. The computing system of clause 14, wherein the storage machine further holds instructions, that when executed by the one or more logic machines cause the computing system to:
   determine a measure of training performance following each round; and
   in response to the measure of training performance decreasing below a first threshold, progress the training into a second phase by adjusting the initial sparsity level to a decreased sparsity level.

## Claims

1. A method (1000) for training a neural network (102), comprising:
for a weight matrix (1100) having an integer dimension M₁ in a first dimension and an integer dimension M₂ a second dimension, generating (1010) a first balanced sparsity mask (1110) that is an N₁ of M₁ mask in the first dimension;
applying (1020) the first balanced sparsity mask (1110) to the weight matrix (1100) during inference;
generating (1030) a second balanced sparsity mask (1210) for a transpose (1200) of the weight matrix (1100), the second balanced sparsity mask (1210) being an N₂ of M₂ mask in the second dimension; and
applying (1040) the second balanced sparsity mask (1210) to the transpose (1200) of the weight matrix (1100) during backpropagation.

2. The method of claim 1, wherein N₁ and N₂ are the same integer value.

3. The method of claim 1, wherein the second balanced sparsity mask is a transpose of the first balanced sparsity mask.

4. The method of claim 1, wherein the first balanced sparsity mask and the second balanced sparsity mask are generated based at least on a top-K function.

5. The method of claim 1, wherein the training is performed over a plurality of sequential phases, each phase including a plurality of rounds, and wherein a first sequential phase of training is performed using an initial level of sparsity.

6. The method of claim 5, further comprising:
determining a measure of training performance following each round.

7. The method of claim 6, further comprising:
in response to the measure of training performance decreasing below a first threshold, progressing the training into a second phase by adjusting the initial sparsity level to a decreased sparsity level.

8. The method of claim 7, further comprising:
in response to the measure of training performance decreasing below a second threshold, progressing the training into a third phase by adjusting the decreased sparsity level to a further decreased sparsity level.

9. A computing system for training a neural network, comprising:
one or more logic machines (1510); and
one or more storage machines (1520), each storage machine holding instructions, that when executed by the one or more logic machines, cause the computing system to perform the method of any of claims 1 to 8.
